# EUROPEAN PATENT SPECIFICATION

(11) **EP 1 909 951 B1**
(45) Date of publication and mention of the grant of the patent: **30.05.2012**
(21) Application number: 06705381.9
(22) Date of filing: 08.03.2006
(51) Int. Cl.: B01F 7/06, B01F 13/08, H02K 7/14

(54) **AGITATOR COMPRISING A PERMANENT MAGNETIC MOTOR ACTING AS A DRIVE UNIT**
RÜHRWERK ENTHALTEND EINEN PERMANENTMAGNETMOTOR ALS ANTRIEBSEINHEIT
AGITATEUR COMPRENANT UN MOTEUR A AIMANTS PERMANENTS TENANT LIEU DE COMMANDE

(30) Priority: 17.03.2005 FI 20050284
(43) Date of publication of application: 16.04.2008
(73) Proprietor: SULZER PUMPEN AG, 8401 Winterthur (CH)
(72) Inventor: HIRVENSALO, Mikko, FI-48310 Kotka (FI); KOSKINEN, Olavi, FIN-24800 Halikko (FI); MANNINEN, Heikki, FIN-35700 Vilppula (FI)
(74) Representative: Sulzer Management AG
(86) International application number: PCT/CH2006/000141
(87) International publication number: WO 2006/097003

(56) References cited:
- EP-A- 0 433 694
- EP-A- 0 762 618
- DE-A1- 4 310 680
- US-A- 3 355 914
- US-A- 5 040 899
- US-A- 5 334 898
- US-B1- 6 531 799

## Description

The present invention relates to an agitator. The present invention especially relates to an agitator, which may be attached to a bottom, wall or cover of a mixing vessel. The agitator in accordance with the present invention is especially applicable to purposes where a relatively large and slowly rotating agitator is required, but the space to be used is limited. Thus, for example, agitators used in dilution vessels, storage towers and the like of wood processing industry come into question.

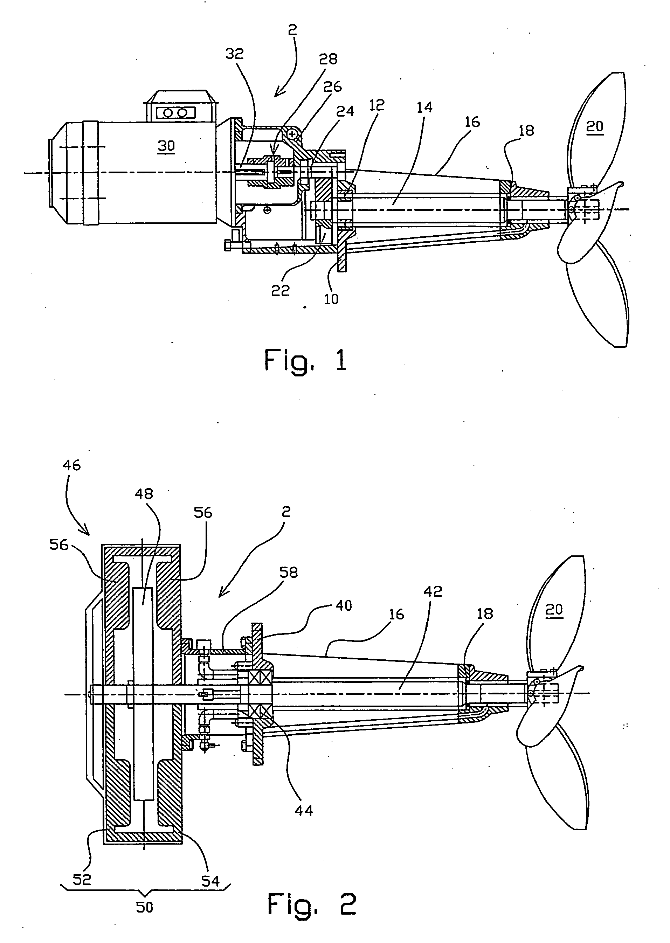

There are previously known agitators, such as the one disclosed in Fig. 1 or in US patent 5,040,899 in which the agitator is formed of an entity composed in connection with a mounting flange, by means of which the agitator is mounted on where it is used. In the structure of Fig. 1, there is a bearing arranged within the agitator flange for the agitator shaft. Similarly, a support, in the case of Fig. 1 a cone, extending to the inside of the vessel is mounted at its one end on the flange, and at the opposite end of said support a second bearing is arranged for the agitator shaft. In other words, the agitator shaft is supported as a whole to the mounting flange. An agitator means is mounted on the end of the agitator shaft inside the vessel, which means is most often a conventional propeller. A gear wheel is attached to the other end of the agitator shaft immediately outside the mounting flange, said gear wheel forming one part of the speed reduction gear of the agitator. The other part of the speed reduction gear is arranged to be in contact with said gear wheel so that its drive shaft is mounted with bearings preferably, but not necessarily, at its one end on the above-mentioned mounting flange and close to its other end on a body member arranged in connection with the mounting flange. Said drive shaft is provided at its outer end with a coupling, one part of which is mounted on the shaft of a conventional drive motor. The drive motor again is naturally located, in the embodiment of the drawing, directly behind the coupling, outside thereof, as seen from the vessel.
In some cases, the above disclosed speed reduction gear carried out by means of gear wheels in the agitator drive is replaced with belt drive.

Document DE 43 10 680 A1 describes another known agitator having a mounting flange by means of which the agitator is mounted to a vessel. The part of the agitator outside the vessel protrudes comparatively far from the surface of the vessel. Document US 6531 799 B1 discloses a hybrid electric machine for use as a starter-alternator in vehicles.

A disadvantage connected to the above-described embodiment is the relatively large space it requires in radial direction outside the vessel. This may sometimes set considerable limitations to the location of both the vessel and the agitators to be assembled in connection with vessel.

Other disadvantages are the various factors depending on the mechanical structure of the agitator drive, for example:
- parts liable to wearing, such as bearings, gear wheels or belts,
- need for maintenance of the drive unit, such as oil changes, relubrications or belt tensionings,
- control and monitoring of the operation and condition,
- additional loading caused by the drive unit to the agitator, such as the axial load because of the gear forces or the radial load because of the belt tensioning,
- liability to damages due to the structure of the drive unit is relatively high.

The present invention aims at eliminating at least some of the disadvantages of the agitators in accordance with the prior art by means of a new maintenance-free drive unit allowing the mounting of the drive unit directly on the agitator shaft without a separate speed reduction gear or like.

Other features typical of an agitator in accordance with the invention become evident from the accompanying patent claims.

Advantages of the arrangement in accordance with the invention are, for example, the following:
- Drive unit does not include parts, such as bearings, gear wheels or belts, liable to wearing due to power transmission.
- Drive unit does not require maintenance, such as oil changes, relubrication or belt tensioning.
- Drive unit does not require control or monitoring.
- The risk of damage of the drive unit is almost non-existent.
- No additional load, such as axial load of the gear forces or radial load because of the belt tensioning, is caused to the agitator.
- Drive unit protects the agitator shaft and the agitator means against the damages due to overload, because the torque curve of the apparatus is horizontal.

The agitator in accordance with the present invention is described more in detail with reference to the accompanying drawings, in which
Fig. 1 schematically illustrates an agitator in accordance with prior art; and
Fig. 2 schematically illustrates an agitator in accordance with the present invention.

Fig. 1 discloses a conventional structural solution for an agitator in accordance with prior art, in which agitator 2 is formed of an entity constructed in connection with a mounting flange 10, by which the agitator is mounted on where it is used. In the structure of Fig. 1, a bearing 12 is arranged within the agitator flange 10 for the agitator shaft 14. Similarly, a support, which in this embodiment is a cone 16, extending to the inside of the vessel (not shown, but would be located to the right from the flange 10 in the drawing) is mounted at its one end on the flange 10. A second bearing 18 is arranged at the opposite end of said cone for the agitator shaft 14. In other words, the agitator shaft 14 is supported as a whole to the mounting flange 10, at its one end directly and at its other end via the support 16. An agitator means 20 is mounted on the end of the agitator shaft 14 inside the vessel, which means is most often a conventional propeller with multiple blades. A gear wheel 22 is attached immediately outside the mounting flange 10 (seen from the vessel), to one end of the agitator shaft 14, which gear wheel forms one part of the speed reduction gear of the agitator 2. The other part of the speed reduction gear is arranged to be in contact with said gear wheel 22 so that its drive shaft 24 is mounted with bearings preferably, but not necessarily, at one of its one end on the above-mentioned mounting flange 10 and close to its other end to a body member 26 arranged in connection with the mounting flange 10. Said drive shaft 24 is connected by means of a conventional coupling 28 to the shaft 32 of a conventional drive motor 30. The drive motor 30 again is naturally located, in the embodiment of the drawing, directly behind the coupling 28, outside thereof as seen from the vessel.

It does not become clear from the embodiment of Fig. 1, but because the speed reduction gear is mechanical, it requires lubrication, which means that the speed reduction gear has to be positioned into a sealed, closed space in the agitator body 26. In addition to the sealings, said space in the body also requires means for monitoring the amount of oil, which can be, for example, a dip stick, a control window for the liquid level or like arrangement.

Another way of modifying the relatively small torque generated by an electric motor to greater torque more suitable for the agitator, whereby at the same time the high rotational speed of the electric motor turns to a lower rotational speed of the agitator, is to use belt drive, but it requires monitoring of the condition of the belt, too, as well as a protective cover in view of possible belt damages. Both drive types subject the shaft of the drive itself as well as that of the agitator to both radial and axial loads.

The above-mentioned problems have been solved in an agitator in accordance with Fig. 2 by arranging a new kind of permanent magnet motor as the agitator drive. It is also called a magnetic flux motor. The agitator illustrated in Fig. 2 partly comprises, mainly as of its parts inside the vessel, the same components as the agitator in accordance with the prior art. The same reference numbers are used in connection with said parts. In other words, the agitator in accordance with the invention is attached to the vessel by means of a mounting flange 40, from which a support 16 for the agitator, said support being of conical shape or some other suitable shape, extends inside the vessel. The bearing arrangement 18 of a shaft 42 and at least the sealing required by the bearing arrangement are positioned at the opposite end of said support 16. The actual agitator means 20 is naturally mounted on the agitator shaft 42.

The agitator shaft 42 is also mounted with a bearing 44 on the mounting flange 40. As an exception to the prior art solution, the agitator shaft 42 extends farther from the wall, bottom or cover of the vessel so that spaced from the mounting flange 40 is mounted a radial disc 48 on the shaft 42, preferably, but not necessarily, substantially on one end thereof, which disc 48 is provided with permanent magnets within equal circumferential distances from each other. Said disc 48 and the end of the shaft are surrounded by a casing 50, the radial walls 52, 54 of which or in connection therewith are provided with coils 56 substantially facing the permanent magnets of the disc. Said coils 56 may be found, however, only on one side of the disc 48, in other words only on one side wall of the casing 50, but preferably the casing 50 is provided with coils 56 on both sides of the disc 48. In other words, said disc 48 forms a rotor 48 of the permanent magnet motor 46 and said casing 50 with the coils 56 the stator of said motor. In the embodiment of the drawing, the stator 50 is attached to the mounting flange 40 of the agitator by means of an intermediary sleeve 58. The drive unit 46 thus operates with the permanent magnet motor principle in such a way that the torque for the shaft 42 is generated electrically through the coils 56 of the stator 50 to the rotor 48 provided with permanent magnets. The operation of the permanent magnet motor is controlled by a frequence converter, by which both the rotational speed of the motor and the torque it generates may be controlled reliably and accurately.

The above-described embodiment enables the mounting of the agitator drive very close to the wall of the vessel or like position, to which the agitator flange is attached. In fact, the only thing requiring some distance from the vessel wall or the like is the lubrication of the bearing 44, which is, however, preferably arranged to be performed from outside the vessel, in other words from between the mounting flange 40 of the agitator and the stator 50 of the permanent magnet motor 46. However, by constructing the bearing housing in the flange 40 such that the bearing is positioned to some extent closer to the agitator means 20, the lubrication of the bearing can be carried out through channels arranged in the flange itself, whereby the stator of the permanent magnet motor can be mounted directly on the mounting flange of the agitator. In some cases, it is even possible to integrate the agitator flange 40 with the casing 50, more closely with the sidewall 54 of the casing 50 facing the flange 40.

As can be seen from the above description, a new kind of an agitator is provided, which is considerably simpler, more reliable and less space consuming than the previous agitators.

## Claims

1. An agitator for use in dilution vessels or storage towers of the wood processing industry, comprising at least a mounting flange (40), by means of which said agitator is attached to a vessel or a tower; an agitator shaft (42), mounted with bearings (44, 18) both on said mounting flange (40) and on a support (16) extending from said mounting flange (40) into said vessel or tower; an agitator means (20) mounted on the support-side end of the agitator shaft and a drive unit for the agitator, **characterized in that** the drive unit comprises a disc (48) attached to an end of the agitator shaft (42) opposite to said agitator means (20), and a casing (50) surrounding said disc and **in that** the disc (48) is provided with permanent magnets cooperating with coils (56) arranged on at least one side of the disc and on at least one wall (52, 54) of the casing (50) surrounding the disc (48) or in connection therewith forming a permanent magnet motor.

2. Agitator in accordance with claim 1, **characterized in that** the at least one wall on which said coils (56) are arranged is a radial side wall (52, 54) of the casing (50) surrounding said disc (48).

3. Agitator in accordance with any of the preceding claims, **characterized in that** said coils (56) are arranged on both of the radial side walls (52, 54) of the casing (50) surrounding the disc (48).

4. Agitator in accordance with any of the preceding claims, **characterized in that** said permanent magnets are arranged on the disc (48) at even circumferential distances from each other.

5. Agitator in accordance with any of the preceding claims, **characterized in that** the casing (50) is attached by means of its side wall (54) to the agitator flange (40).

6. Agitator in accordance with any of the preceding claims, **characterized in that** the casing (50) is attached to the agitator flange (40) by means of an intermediary sleeve (52).

7. Agitator in accordance with any of the preceding claims, **characterized in that** the casing (50) is integrated with the agitator flange (40).

8. Agitator in accordance with any of the preceding claims, **characterized in that** the agitator flange (40) is provided with means for lubricating the bearing (44) arranged in connection with the flange (40).

9. Agitator in accordance with any of the preceding claims, **characterized in that** the agitator is mounted via its flange (40) on the bottom, wall or cover of the vessel or tower.

## Patentansprüche

1. Rührwerk zur Verwendung in Verdünnungsgefäßen oder Speichertürmen der holzverarbeitenden Industrie, mit zumindest einem Montageflansch (40), mittels dem das Rührwerk an einem Gefäß oder einem Turm befestigt ist; einer Rührwerkwelle (42), die mit Lagern (44, 18) sowohl an dem Montageflansch (40) als auch an einem Träger (16) montiert ist, der sich von dem Montageflansch (40) in das Gefäß oder den Turm erstreckt; einem Rührwerkmittel (20), das an dem trägerseitigen Ende der Rührwerkwelle montiert ist, und einer Antriebseinheit für das Rührwerk,
**dadurch gekennzeichnet, dass**
die Antriebseinheit eine Scheibe (48), die an einem Ende der Rührwerkwelle (42) gegenüberliegend dem Rührwerkmittel (20) befestigt ist, und ein Gehäuse (50) umfasst, das die Scheibe umgibt, und dass die Scheibe (48) mit Permanentmagneten versehen ist, die mit Wicklungen (56) zusammenwirken, die an zumindest einer Seite der Scheibe und an zumindest einer Wand (52, 54) des Gehäuses (50), das die Scheibe (48) umgibt, oder in Verbindung damit angeordnet sind, wobei ein Permanentmagnetmotor gebildet wird.

2. Rührwerk nach Anspruch 1,
**dadurch gekennzeichnet, dass**
die zumindest eine Wand, an der die Wicklungen (56) angeordnet sind, eine radiale Seitenwand (52, 54) des Gehäuses (50), das die Scheibe (48) umgibt, ist.

3. Rührwerk nach einem der vorhergehenden Ansprüche,
**dadurch gekennzeichnet, dass**
die Wicklungen (56) an beiden radialen Seitenwänden (52, 54) des Gehäuses (50), das die Scheibe (48) umgibt, angeordnet sind.

4. Rührwerk nach einem der vorhergehenden Ansprüche,
**dadurch gekennzeichnet, dass**
die Permanentmagneten an der Scheibe (48) an regelmäßigen Umfangsdistanzen voneinander angeordnet sind.

5. Rührwerk nach einem der vorhergehenden Ansprüche,
**dadurch gekennzeichnet, dass**
das Gehäuse (50) mittels seiner Seitenwand (54) an dem Rührwerkflansch (40) befestigt ist.

6. Rührwerk nach einem der vorhergehenden Ansprüche,
**dadurch gekennzeichnet, dass**
das Gehäuse (50) an dem Rührwerkflansch (40) mittels einer Zwischenbuchse (52) befestigt ist.

7. Rührwerk nach einem der vorhergehenden Ansprüche,
**dadurch gekennzeichnet, dass**
das Gehäuse (50) mit dem Rührwerkflansch (40) integriert ist.

8. Rührwerk nach einem der vorhergehenden Ansprüche,
**dadurch gekennzeichnet, dass**
der Rührwerkflansch (40) mit einem Mittel zum Schmieren des Lagers (44) versehen ist, das in Verbindung mit dem Flansch (40) angeordnet ist.

9. Rührwerk nach einem der vorhergehenden Ansprüche,
**dadurch gekennzeichnet, dass**
das Rührwerk über seinen Flansch (40) an dem Boden, der Wand oder der Abdeckung des Gefäßes oder des Turmes montiert ist.

## Revendications

1. Agitateur pour utilisation dans des cuves de dilution ou des tours de stockage de l'industrie de traitement du bois, comprenant au moins une bride de montage (40) au moyen de laquelle ledit agitateur est fixé à une cuve ou une tour; un arbre agitateur (42) monté avec des paliers (44, 18) à la fois sur ladite bride de montage (40) et sur un support (16) s'étendant depuis ladite bride de montage (40) dans ladite cuve ou tour; un moyen d'agitation (20) monté sur l'extrémité côté support de l'arbre agitateur et une unité d'entraînement pour l'agitateur, **caractérisé en ce que** l'unité d'entraînement comprend un disque (48) fixé à une extrémité de l'arbre d'agitateur (42) opposée audit moyen agitateur (20), et un boîtier (50) entourant ledit disque, et **en ce que** le disque (48) est pourvu d'aimants permanents coopérant avec des bobines (56) agencées sur au moins un côté du disque et sur au moins une paroi (52, 54) du boîtier (50) entourant le disque (48) ou en connection avec celui-ci en formant un moteur à aimants permanents.

2. Agitateur selon la revendication 1, **caractérisé en ce que** la au moins une paroi sur laquelle lesdites bobines (56) sont agencées, est une paroi latérale radiale (52, 54) du boîtier (50) entourant ledit disque (48).

3. Agitateur selon l'une quelconque des revendications précédentes, **caractérisé en ce que** lesdites bobines (56) sont agencées sur les deux parois latérales radiales (52, 54) du boîtier (50) entourant le disque (48).

4. Agitateur selon l'une quelconque des revendications précédentes, **caractérisé en ce que** lesdits aimants permanents sont agencés sur le disque (48) à des distances circonférentielles égales les uns des autres.

5. Agitateur selon l'une quelconque des revendications précédentes, **caractérisé en ce que** le boîtier (50) est fixé par sa paroi latérale (54) à la bride d'agitateur (40).

6. Agitateur selon l'une quelconque des revendications précédentes, **caractérisé en ce que** le boîtier (50) est fixé à la bride d'agitateur (40) par un manchon intermédiaire (52).

7. Agitateur selon l'une quelconque des revendications précédentes, **caractérisé en ce que** le boîtier (50) est intégré avec la bride d'agitateur (40).

8. Agitateur selon l'une quelconque des revendications précédentes, **caractérisé en ce que** la bride d'agitateur (40) est pourvue de moyens pour lubrifier le palier (44) agencé en rapport avec la bride (40).

9. Agitateur selon l'une quelconque des revendications précédentes, **caractérisé en ce que** l'agitateur est monté par sa bride (40) sur le fond, la paroi ou le couvercle de la cuve ou de la tour.
